**Europäisches Patentamt**

**European Patent Office**

**Office européen des brevets**

(19)

(11) Veröffentlichungsnummer: **0 314 945 B1**

# (12) EUROPÄISCHE PATENTSCHRIFT

(45) Veröffentlichungstag der Patentschrift:
08.05.91 Patentblatt 91/19

(51) Int. Cl.$^5$: **B23B 31/00, B23B 31/16**

(21) Anmeldenummer: **88116879.3**

(22) Anmeldetag: **11.10.88**

(54) Einrichtung zur Betätigung der Spannbacken eines Kraftspannfutters.

(30) Priorität: **03.11.87 DE 3737190**

(43) Veröffentlichungstag der Anmeldung:
**10.05.89 Patentblatt 89/19**

(45) Bekanntmachung des Hinweises auf die
Patenterteilung:
**08.05.91 Patentblatt 91/19**

(84) Benannte Vertragsstaaten:
**DE FR GB IT**

(56) Entgegenhaltungen:
**DE-A- 1 552 302**
**FR-A- 1 030 079**

(73) Patentinhaber: **SMW Schneider & Weisshaupt GmbH**
**Wiesentalstrasse 28**
**W-7996 Meckenbeuren (DE)**

(72) Erfinder: **Hiestand, Karl**
**Mühlweg 2**
**W-7798 Pfullendorf (DE)**

(74) Vertreter: **Engelhardt, Guido, Dipl.-Ing.**
**Patentanwalt Montafonstrasse 35 Postfach 1350**
**W-7990 Friedrichshafen 1 (DE)**

EP 0 314 945 B1

## Beschreibung

Die Erfindung bezieht sich auf eine Einrichtung zur Betätigung der in einem angetriebenen Futterkörper radial verstellbar geführten Spannbacken eines auf einer Werkzeugmaschine angeordneten Kraftspannfutters, die über Keilstangen, Keilhaken, Hebel oder ähnliche Zwischenglieder mit einem verdrehbaren oder axial verschiebbaren Verstellglied gekoppelt sind, das zum Erzeugen einer Stelldrehbewegung mit einem Stellantrieb in Triebverbindung steht, wobei der Stellantrieb durch einen ortsfest angeordneten unsteuerbaren Elektromotor und einem diesem nachgeschalteten Getriebe gebildet ist, das über eine Drehmomentkupplung mit dem Elektromotor in Triebverbindung steht.

Durch die DE-OS 15 52 302 ist eine Betätigungseinrichtung dieser Art bekannt. Zur Erzeugung der die Verstellbewegungen der Spannbacken hervorrufenden Drehbewegungen ist bei dieser Ausgestaltung ein Reduktionsgetriebe in Form eines Planeten-Differentialgetriebes vorgesehen, das mit Hilfe einer Magnet-Pulverkupplung mit dem Antriebsmotor verbunden ist. Bei normalem Dauerbetrieb der Drehmaschine ist der Antriebsmotor stillgesetzt und das Antriebsritzel des Planeten-Differentialgetriebes ist von diesem abgekuppelt. Beim Einspannen und Lösen eines Werkstückes wird bei stillstehender Maschinenspindel das Antriebsritzel dagegen durch den Antriebsmotor in Rotation versetzt, so daß über eine Spirale die Spannbacken entsprechend verstellt werden können.

Im Normalbetrieb kann bei eingeschalteter Kupplung zwar auch eine Nachstellbewegung der Spannbacken vorgenommen werden, der Antriebsmotor muß in diesem Betriebszustand aber in der gleichen Drehrichtung wie die Maschinenspindel umlaufen und das mit den Spannbacken verbundene Verstellglied muß mit einer höheren Drehzahl als diese angetrieben werden. Die Differenzdrehzahlen zwischen den beiden Kupplungshälften sind somit bei dieser Einrichtung außerordentlich hoch und nicht mehr beherrschbar.

Aufgabe der Erfindung ist es demnach, eine Einrichtung der eingangs genannten Gattung in der Weise auszubilden, daß der Antriebsmotor des Stellantriebes ständig, um die Spannkraft aufrechtzuerhalten und gleichzeitig gegebenenfalls eine Nachspannung vorzunehmen, mit einer von der Drehzahl und der Drehrichtung der Maschinenspindel unabhängiger konstanter Drehzahl und Drehrichtung umlaufen kann und somit stets ein gleichmäßiges Drehmoment abgibt. Des weiteren soll das Einspannen und das Entspannen eines Werkstückes durch Änderung der Drehrichtung des Stellantriebmotors auf einfache Weise vorzunehmen sein, auch soll die auf ein Werkstück einwirkende Spannkraft ohne Schwierigkeiten eingestellt werden können. Der Bauaufwand, der erforderlich ist, um dies zu bewerkstelligen, soll gering gehalten werden, so daß eine kostengünstige Herstellung und eine kompakte Bauweise zu realisieren sind.

Gemäß der Erfindung wird dies dadurch erreicht, daß das Getriebe als ein zweistufiges Gleichlaufgetriebe nach Art eines Vorgelegetriebes ausgebildet ist, dessen Zentralräder drehbar ineinander gelagert und über ein Stufengetriebe an dem Antriebsglied des Kraftspannfutters abgestützt und mit dem den Spannbacken zugeordneten Verstellglied trieblich verbunden sind, daß die Zentralräder des Vorgelegegetriebes durch zwei auf der Vorgelegewelle drehfest angeordnete Vorgelegeräder trieblich und gleichlaufend gekoppelt sind, daß die Vorgelegewelle um die Zentralräder drehbar gelagert ist und lastabhängig an dem Abtriebsglied der Drehmomentkupplung und/oder dem Antriebsmotor unmittelbar oder über ein Zwischenglied abgestützt ist und daß die Untersetzungsstufen des Vorgelegetriebes den Übersetzungsstufen des nachgeschalteten Stufengetriebes entsprechen.

Zweckmäßig ist es hierbei, die Vorgelegewelle in einem verdrehbar gelagerten Gehäuse, einem U-förmig gestalteten Bügel oder dgl. als Zwischenglied drehbar abzustützen, das mit dem Abtriebsglied der Drehmomentkupplung trieblich verbunden ist.

Des weiteren soll der Antriebsmotor des Stellantriebes in Achsrichtung der Hauptwelle des Vorgelegegetriebes angeordnet sein.

Die Zentralräder und die Vorgelegeräder des Vorgelegetriebes sowie das diesem nachgeschaltete Stufengetriebe können durch Riemenscheiben und über diese geführte Zahn- oder Flachriemen gebildet werden, es ist aber auch möglich, das Vorgelegetriebe aus ineinandergreifenden Zahnrädern und das nachgeschaltete Stufengetriebe aus Riemenscheiben und über diese geführte Zahn- oder Flachriemen herzustellen.

Die dem Elektromotor nachgeschaltete Drehmomentkupplung kann eine elektromagnetische Kupplung, eine Flüssigkeitskupplung oder dgl. mit vorzugsweise einstellbarem übertragbarem Drehmoment sein.

Wird eine Einrichtung zur Erzeugung einer Stelldrehbewegung gemäß der Erfindung ausgebildet, so ist es möglich, den Antriebsmotor des Stellantriebes im Normalbetrieb stets mit gleicher Drehzahl und gleicher Drehrichtung umlaufen zu lassen, ohne daß eine Regelung oder eine gesonderte Kühlung notwendig sind. Als Antriebsmotor kann somit ein kostengünstiger Norm-Elektromotor verwendet werden. Und um ein Werkstück einzuspannen oder das diese aufnehmende Kraftspannfutter zu öffnen, ist bei stillgesetzter Maschinenspindel lediglich der Antriebsmotor des Stellantriebes in der entsprechenden Drehrichtung umlaufen zu lassen. Eine Nachspannung dagegen wird selbsttätig durch geringfügiges Verdrehen der Vorgelegewelle um die Hauptwelle des Vorgelegegetriebes, bis wiederum der Gleichgewichtszustand zwischen dem von der Drehmomentkupplung übertragenen Drehmoment und der aufgebrachten Spannkraft hergestellt ist, bewirkt. Der Bau- und Steuerungsaufwand ist demnach äußerst gering, auch ist eine einfache Handhabung gegeben.

Des weiteren ist von Vorteil, daß das Vorgelegegetriebe und das Stufengetriebe ganz oder teilweise als Riemengetriebe ausgebildet werden können. Schmierprobleme treten somit nicht auf, auch sind deren Betriebsgeräusche, trotz mitunter hoher Drehzahlen, auf niederem Niveau zu halten. Und mittels der Drehmomentkupplung ist die auf ein einzuspannendes Werkstück auszuübende Spannkraft an die jeweiligen Verhältnisse leicht anpaßbar.

In der Zeichnung ist ein Ausführungsbeispiel der gemäß der Erfindung ausgebildeten Einrichtung zur Betätigung der Spannbacken eines Kraftspannfutters schematisch dargestellt, das nachfolgend im einzelnen erläutert ist. Hierbei zeigt :

Figur 1 eine mit einem aus Antriebsmotor, Vorgelegetriebe und Stufengetriebe gebildeten Stellantrieb versehene Drehmaschine,

Figur 2 eine andersartige Ausgestaltung der dem Antriebsmotor des Stellantriebes nach Figur 1 zugeordneten Drehmomentkupplung und

Figur 3 eine andersartige Ausgestaltung des bei dem Stellantrieb nach Figur 1 vorgesehenen Vorgelegetriebes.

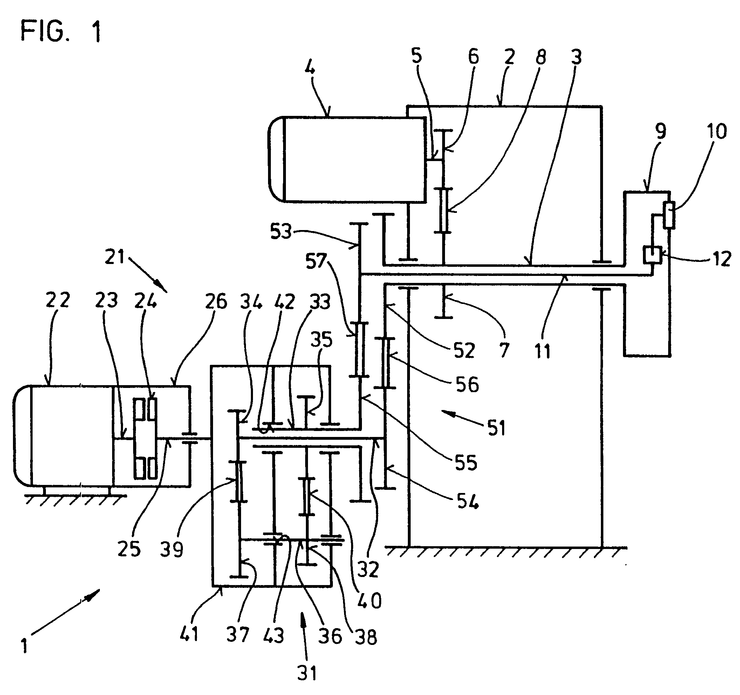

Die in den Figuren 1 bis 3 dargestellte und mit 1 bezeichnete Einrichtung dient zur Betätigung der in einem Futterkörper eines auf einer Drehmaschine 2 angeordneten Kraftspannfutters 9 radial verstellbar geführter Spannbacken 10, die mittels eines Umlenkgliedes 12 trieblich mit einem rotierend angetriebenen Stellglied 11 gekoppelt sind, das durch einen Stellantrieb 21 betätigbar ist. Zum Antrieb des mit einer Maschinenspindel 3 verbundenen Kraftspannfutters 9 ist ein Motor 4 vorgesehen, dessen Abtriebswelle 5 über eine Riemenscheibe 6 und einen Flach- oder Keilriemen 8 mit einer Riemenscheibe 7 in Triebverbindung steht, die drehfest auf der Maschinenspindel 3 angeordnet ist.

Der Stellantrieb 21 besteht aus einem Antriebsmotor 22, einer mit dessen Abtriebswelle 23 zusammenwirkenden Drehmomentkupplung 24 sowie einem zweistufigen Gleichlaufgetriebe nach Art eines Vorgelegetriebes 31 und einem Stufengetriebe 51. Mittels des Stellantriebes 21 ist bei stillstehender Maschinenspindel 3 das Verstellglied 11 antreibbar, um das Kraftspannfutter 9 zu öffnen oder um ein Werkstück zwischen den um 120° versetzt zueinander angeordneten Spannbacken 10 einzuspannen. Außerdem wird bei umlaufendem Kraftspannfutter 9 die von den Spannbacken 10 aufzubringende Spannkraft aufrechterhalten und selbsttätig gegebenenfalls eine Nachspannung vorgenommen.

Das Vorgelegegetriebe 31 ist aus auf einer Hauptwelle 32 und einer diese aufnehmenden zentralen Hohlwelle 33 drehfest gelagerten Zentralräder 34 und 35 sowie aus auf einer Vorgelegewelle 36 angeordneten Vorgelegerädern 37 and 38 gebildet, die über Riemen 39 und 40 trieblich miteinander verbunden sind. Die Vorgelegewelle 36 ist hierbei mittels Lager 43 drehbar in einem Gehäuse 41 gehalten, das mittels Lager 42 an der zentralen Hohlwelle 33 abgestützt ist. Außerdem ist das Gehäuse 41 mit der Abtriebswelle 25 der in einem Gehäuse 26 angeordneten Drehmomentkupplung 24 verbunden.

Das Stufengetriebe 51 besteht aus einem auf der Maschinenspindel 3 angeordneten Rad 52, einem auf dem Verstellglied 11 gehaltenen Rad 53 sowie mittels Flach- oder Keilriemen 56 und 57 mit diesen trieblich verbundenen Rädern 54 und 55, die auf der Hauptwelle 32 bzw. der zentralen Hohlwelle 33 drehfest gelagert sind. Die beiden Übersetzungsstufen des Stufengetriebes 51 entsprechen hierbei den jeweils angeschlossenen Untersetzungsstufen des Vorgelegetriebes 31.

Soll ein Werkstück in dem Kraftspannfutter 9 eingespannt werden, so ist der Antriebsmotor 22 des Stellantriebes 21 bei stillstehender Maschinenspindel 3 einzuschalten. Über die Drehmomentkupplung 24 wird in diesem Betriebszustand das Gehäuse 41 angetrieben und die Vorgelegewelle 36 rotiert somit um die Hauptwelle 32, die über das Rad 54, den Riemen 56 und das Rad 52 an der stillstehenden Maschinenspindel 3 abgestützt ist. Die von der Drehmomentkupplung 24 abgenommene Antriebsenergie wird dabei über das Gehäuse 41, die Vorgelegewelle 36, das Rad 38, den Riemen 40 sowie das Rad 35, die zentrale Hohlwelle 33 und das Rad 55, den Riemen 57 und das Rad 53 auf das Verstellglied 11 und von diesem über das Umlenkglied 12 auf die Spannbacken 10 übertragen. Das Gehäuse 41 läuft bei einem Spannvorgang so lange um, bis ein Gleichgewichtszustand zwischen dem von der Drehmomentkupplung 24 abgenommenen Drehmoment und der auf das eingespannte Werkstück ausgeübten Spannkraft erreicht ist. Mit Hilfe der Drehmomentkupplung 24 kann somit auf einfache Weise die jeweilige Spannkraft gewählt werden.

Wird nach Beendigung des Spannvorganges, z.B. durch Einschalten des Motors 4, die Maschinenspindel 2 in Betrieb genommen, so laufen sämtliche Getriebeglieder des Vorgelegegetriebes 31 und des Stufengetriebes 51 um. Das Gehäuse 41 des Vorgelegetriebes 31 ist in diesem Betriebszustand durch das über die Drehmomentkupplung 24 auf dieses einwirkende Drehmoment, das von dem Antriebsmotor 22 aufgebracht wird, abgestützt und behält, da die jeweiligen Unter- bzw. Übersetzungsstufen des Vorgelegetriebes 31 und des Stufengetriebes 51 gleich bemessen sind, die nach Beendigung des Spannvorganges eingenommene Lage bei. Ändert sich jedoch im Normalbetrieb, aus welchem Grunde auch immer, die Spannkraft, so wird das Gehäuse 41, da das von der Drehmomentkupplung 24 übertragene Drehmoment konstant ist, so lange nachgeführt, bis wiederum der Gleichgewichtszustand hergestellt ist. Durch das Verdrehen des Gehäuses 41 und der mit diesem verbundenen Vorgelegewelle 36 wird somit die Drehzahl des Verstellgliedes 11 für kurze Zeit geringfügig erhöht oder reduziert.

Zum Öffnen des Spannfutters 9 ist bei stillstehender Maschinenspindel 3 lediglich die Drehrichtung des Antriebsmotors 22 des Stellantriebes 21 umzukehren. Das Gehäuse 41 wird wiederum so lange um die Hauptwelle 32 gedreht, bis die Spannbacken 10 in der Endlage an einem Anschlag anliegen und ein Gleichgewichtszustand zwischen dem von der Drehmomentkupplung 24 abgegebenen Drehmoment und der auf den Anschlag durch die Spannbacken 10 ausgeübten Kraft hergestellt ist.

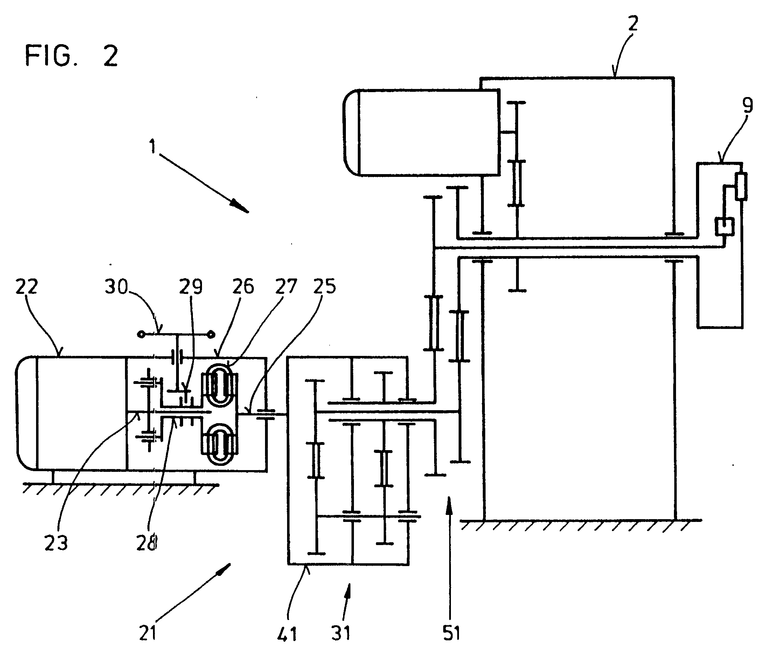

In Figur 2 ist zwischen dem Antriebsmotor 22 und dem Gehäuse 41 des Vorgelegegetriebes 31 eine Drehmomentkupplung 27 eingesetzt, deren übertragbares Drehmoment eingestellt werden kann, so daß auch die Spannkraft des Kraftspannfutters 9 einzustellen ist. Dazu dient eine trieblich mit der Abtriebswelle 23 des Antriebsmotors 22 und einer Hälfte der Drehmomentkupplung 27 verbundene Schiebemuffe 28, die mit Hilfe eines Exzenters 29, der durch ein Handrad 30 betätigbar ist, axial verstellt werden kann. Durch Verändern des Abstandes zwischen den beiden Kupplungsteilen der elektromagnetisch wirksamen Drehmomentkupplung 27 kann somit das jeweils übertragbare Drehmoment eingestellt werden.

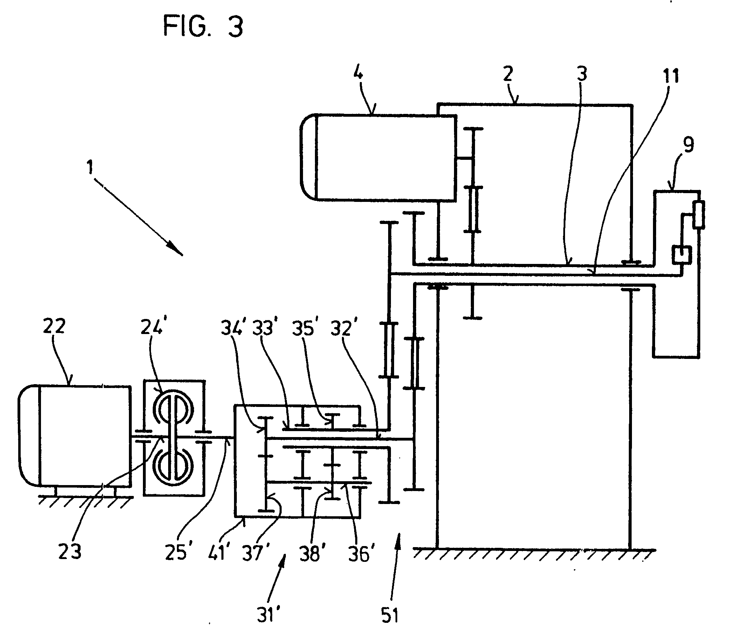

Bei dem Ausführungsbeispiel nach Figur 3 ist als Drehmomentkupplung 24' eine Flüssigkeitskupplung vorgesehen und das Vorgelegegetriebe 31' ist durch Stirnräder 34', 37' und 35', 38' gebildet, die auf der Hauptwelle 32', der zentralen Hohlwelle 33' und der Vorgelegewelle 38' angeordnet sind. Über eine Welle 25' ist das Gehäuse 41' mit der Drehmomentkupplung 24' trieblich verbunden.

## Ansprüche

1. Einrichtung zur Betätigung der in einem angetriebenen Futterkörper radial verstellbar geführten Spannbacken (10) eines auf einer Werkzeugmaschine (2) angeordneten Kraftspannfutters (9), die über Keilstangen, Keilhaken, Hebel oder ähnliche Zwischenglieder mit einem verdrehbaren oder axial verschiebbaren Verstellglied (11) gekoppelt sind, das zum Erzeugen einer Stelldrehbewegung mit einem Stellantrieb (21) in Triebverbindung steht, wobei der Stellantrieb (21) durch einen ortsfest angeordneten umsteuerbaren Elektromotor (22) und einem diesem nachgeschalteten Getriebe gebildet ist, das über eine Drehmomentkupplung mit dem Elektromotor in Triebverbindung steht, **dadurch gekennzeichnet, daß** das Getriebe als ein zweistufiges Gleichlaufgetriebe nach Art eines Vorgelegegetriebes (31, 31') ausgebildet ist, dessen Zentralräder (34, 35 ; 34', 35') drehbar ineinander gelagert und über ein Stufengetriebe (51) mit dem Antriebsglied (3) des Kraftspannfutters (9) und dem den Spannbacken (10) zugeordneten Verstellglied (11) trieblich verbunden ist, daß die Zentralräder (34, 35 ; 34', 35') des Vorgelegegetriebes (31, 31') durch zwei auf der Vorgelegewelle (36, 36') drehfest angeordneten Vorgelegeräder (37, 38 ; 37', 38') trieblich und gleichlaufend gekoppelt sind, daß die Vorgelegewelle (36, 36') um die Zentralräder (34, 35; 34', 35') drehbar gelagert ist und lastabhängig an dem Abtriebsglied (25, 25') der Drehmomentkupplung (24, 24' ; 27) und/oder dem Antriebsmotor (22) abgestützt ist und daß die Untersetzungsstufen (34, 37 und 35, 38 bzw. 34', 37' und 35', 38') des Vorgelegegetriebes (31, 31') den Übersetzungsstufen (52, 54 und 53, 55) des nachgeschalteten Stufengetriebes (51) entsprechen.

2. Einrichtung nach Anspruch 1, **dadurch gekennzeichnet, daß** die Vorgelegewelle (36, 36') in einem verdrehbar gelagerten Gehäuse (41, 41'), einem U-förmig gestalteten Bügel oder dgl. drehbar abgestützt ist, das mit dem Abtriebsglied (25, 25') der Drehmomentkupplung (24, 24') trieblich verbunden ist.

3. Einrichtung nach Anspruch 1 oder 2, **dadurch gekennzeichnet, daß** der Antriebsmotor (22) des Stellantriebes (21, 21') in Achsrichtung der Hauptwelle (31, 32') des Vorgelegegetriebes (31, 31') angeordnet ist.

4. Einrichtung nach einem oder mehreren der Ansprüche 1 bis 3, **dadurch gekennzeichnet, daß** die Zentralräder (34, 35) und die Vorgelegeräder (37, 38) des Vorgelegegetriebes (31) sowie das diesem nachgeschaltete Stufengetriebe (51) durch Riemenscheiben und über diese geführte Zahn- oder Flachriemen (39, 40 bzw. 56, 57) gebildet sind.

5. Einrichtung nach einem oder mehreren der Ansprüche 1 bis 3, **dadurch gekennzeichnet, daß** das Vorgelegegetriebe (31') durch ineinandergreifende Zahnräder (34', 37' bzw. 35', 38') und das nachgeschaltete Stufengetriebe (51) durch Riemenscheiben (52, 54 bzw. 53, 55) und über diese geführte Zahn- oder Flachriemen (56, 57) gebildet sind.

6. Einrichtung nach einem oder mehreren der Ansprüche 1 bis 5, **dadurch gekennzeichnet, daß** die dem Elektromotor (22) nachgeschaltete Drehmomentkupplung als elektromagnetische Kupplung (24, 27), als Flüssigkeitskupplung (24') oder dgl. mit vorzugsweise einstellbaren übertragbaren Drehmoment ausgebildet ist.

## Claims

1. Device for actuating radially adjustable chuck jaws (10) in a chuck head driven in a powered chuck (9) arranged on a machine tool (2) and which are connected by means of splined rods, wedge-shaped keys, levers or some similar intermediate member to a rotating or axially displaceable adjusting member (11) which is connected in turn to an actuator (21) to produce an actuating motion, whereby the actuator (21) is arranged as a fixed-location reversible electric motor (22) and a rear-mounted gearbox which is driven by the electric motor via a torque coupling and **characterized in that** the gearbox is a two-speed synchronous unit arranged as a countershaft gearbox (31, 31') in which the central gears (34, 35 ; 34', 35') are rotatably mounted in one another and are connected to the drive member (3) of the power chuck (9) and the adjusting member (11) of the chuck jaws (10) via a ratio gearbox (51), in that the central gears (34, 35; 34', 35') of the countershaft gearbox (31, 31') are connected and driven synchronously by two countershaft gears (37, 38 ; 37', 38') rigidly mounted on the countershaft (36, 36'), in that the countershaft (36, 36') is rotatably mounted relative to the central gears (34, 35 ; 34', 35') and is supported in a load-dependent fashion by the output member (25, 25') of the torque coupling (24, 24' ; 27) and/or by the drive motor (22) and in that the reduction ratios (34, 37 and 35, 38 or 34', 37' and 35', 38') of the countershaft gearbox (31, 31') are equivalent to the ratio steps (52, 54 and 53, 55) of the rear-mounted ratio gearbox (51).

2. Device as claimed in claim 1, **characterized in that** the countershaft gearbox (36, 36') is supported in a rotatably-mounted housing (41, 41'), a U-shaped bracket or similar device which is connected to and driven by the output member of the torque coupling (24, 24').

3. Device as claimed in claim 1 or 2, **characterized** in that the drive motor (22) of the actuator (21, 21') is aligned axially with the main shaft (31, 32') of the countershaft gearbox (31, 31').

4. Device as claimed in one or more of claims 1 to 3, **characterized in that** the central gears (34, 35) and the countershaft gears (37, 38) of the countershaft gearbox (31) and its rear-mounted ratio gearbox (51) are arranged as belt pulleys and toothed or plain belts (39, 40 and 56, 57 respectively) which run over them.

5. Device as claimed in one or more of claims 1 to 3, **characterized in that** the countershaft gearbox (31') is arranged as a set of meshing gears (34', 37' or 35', 38') and the rear-mounted ratio gearbox is arranged as a set of belt pulleys and toothed or plain belts (39, 40 or 56, 57) which run over them.

6. Device as claimed in one or more of claims 1 to 5, **characterized in that** the torque coupling rear-mounted on the electric motor (22) is arranged as an electromagnetic coupling (24, 27), a fluid coupling (24') or similar device with, preferably, some means of adjusting transmitted torque.

## Revendications

1. Equipement d'actionnement de mors de serrage (10) guidés radialement dans un corps motorisé d'un mandrin de serrage automatique (9) monté sur une machine-outil (2), ce mandrin étant raccordé par l'intermédiaire de crémaillères, de rampes et de leviers ou d'éléments intermédiaires similaires à un membre de réglage (11) rotatif ou axialement déplaçable et solidaire d'un entraînement de réglage (21) destiné à produire un mouvement de réglage, l'entraînement (21) étant constitué d'un moteur électrique stationnaire réversible (22) et d'un engrenage monté en aval du moteur et raccordé au moteur électrique par un accouplement.

*se caractérisant par le fait que* l'engrenage est conçu en tant qu'engrenage synchronisé à deux étages semblable à un engrenage intermédiaire (31, 31'), les roues centrales (34, 35 ; 34', 35') desquels tournent l'une dans l'autre et qui, par l'intermédiaire d'un engrenage étagé (51), sont solidaires de l'élément d'entraînement (3) du mandrin de serrage automatique (9) et du membre de réglage (11) attribué au mors de serrage (10), que les roues centrales (34, 35; 34', 35') de l'engrenage intermédiaire (31, 31') sont couplées d'une manière synchrone par des roues à engrenage (37, 38 ; 37', 38') montées rigidement sur l'arbre à engrenage (36, 36'), que l'arbre à engrenage (36, 36') est appuyé en fonction de la charge sur l'élément de prise de force (25, 25') de l'accouplement (24, 24' ; 27) et/ou sur le moteur d'entraînement (22), et tourne sur les roues centrales (34, 35 ; 34', 35'), et que les étages de démultiplication (34, 37 et 35, 38 ou 34', 37' et 35', 38') de l'engrenage intermédiaire (31, 31') correspondent aux étages de différentiel (52, 54 et 53, 55) de l'engrenage étagé (51) monté en aval.

2. Equipement d'après la revendication 1, *se caractérisant par le fait que* l'arbre à engrenage (36, 36') tourne dans un boîtier rotatif (41, 41'), un étrier sous la forme d'un U ou dans un dispositif semblable, solidaire de l'élément de prise de force (25, 25') de l'accouplement (24, 24').

3. Equipement d'après les revendications 1 ou 2, *se caractérisant par le fait que* le moteur d'entraînement (22) de l'entraînement de réglage (21, 21') est disposé dans le sens de l'axe de l'arbre principal (31, 32') de l'engrenage intermédiaire (31, 31').

4. Equipement d'après une ou plusieurs des revendications 1 à 3, *se caractérisant par le fait que* les roues centrales (34, 35) et les roues à engrenage (37, 38) de l'engrenage intermédiaire (31) et l'engrenage étagé (51) monté en aval sont constitués de poulies de courroie et des courroies dentées ou plates (39, 40 ou 56, 57) serrées sur ces poulies.

5. Equipement d'après une ou plusieurs des revendications 1 à 3, *se caractérisant par le fait que* l'engrenage intermédiaire (31'), est formé par des roues dentées engrenées (34', 37' ou 35', 38') et l'engrenage étagé (51) monté en aval, par des poulies de courroie (52, 54 ou 53, 55) et des courroies dentées ou plates (56, 57) serrées sur ces poulies.

6. Equipement d'après une ou plusieurs des revendications 1 à 5, *se caractérisant par le fait que* l'accouplement monté en aval du moteur électrique (22) est un accouplement électro-magnétique (24, 27), un accouplement hydraulique (24') ou un dispositif similaire avec, de préférence, une régulation du couple transmis.

FIG. 1

FIG. 2

EP 0 314 945 B1

FIG. 3